# EUROPÄISCHE PATENTSCHRIFT

(11) **EP 3 157 354 B1**
(45) Veröffentlichungstag und Bekanntmachung des Hinweises auf die Patenterteilung: **04.10.2023**
(21) Anmeldenummer: 15729821.7
(22) Anmeldetag: 16.06.2015
(51) Int. Cl.: A23G 3/44, A23J 3/34, A23L 9/10, A23L 29/281, A23L 33/28, A23J 3/06

(54) **ZUSAMMENSETZUNG IN FORM VON KOMPAKTIERTEN PARTIKELN UND DEREN VERWENDUNG**
COMPOSITION IN THE FORM OF COMPACTED PARTICLES AND USE THEREOF
COMPOSITION SOUS FORME DE PARTICULES COMPACTÉES ET SON UTILISATION

(30) Priorität: 17.06.2014 DE 102014108502
(43) Veröffentlichungstag der Anmeldung: 26.04.2017
(73) Patentinhaber: Gelita AG, 69412 Eberbach (DE)
(72) Erfinder: DICK, Eberhard, 69151 Neckargemünd (DE); GÖTTLING, Sonja, 64646 Heppenheim (DE); WIRTH, Sigrid, 74867 Neunkirchen (DE); BEISEL, Jens, 64757 Rothenberg (DE)
(74) Vertreter: Hoeger, Stellrecht & Partner Patentanwälte mbB
(86) Internationale Anmeldenummer: PCT/EP2015/063456
(87) Internationale Veröffentlichungsnummer: WO 2015/193300

(56) Entgegenhaltungen:
- US-A- 1 896 049
- US-A- 4 546 002
- US-A1- 2005 089 619
- US-A1- 2011 287 114

## Beschreibung

Die vorliegende Erfindung betrifft eine Zusammensetzung in Form von kompaktierten Partikeln.

Die Erfindung betrifft ferner die Verwendung dieser Zusammensetzung, insbesondere zur Herstellung von Lebensmitteln.

Verschiedene Arten von Lebensmitteln, vor allem Süßwaren und Desserts, erhalten ihre typische Konsistenz durch ein Gelatinegel. Zur Herstellung eines solchen Gels muss zunächst eine homogene Lösung der Gelatine in Wasser bzw. einem wässrigen Medium hergestellt werden. Ja nach Art des Lebensmittels kann diese Gelatinelösung auf der Ebene der industriellen Produktion (z.B. bei Fruchtgummis) oder der individuellen Herstellung des verzehrfertigen Produkts durch den Verbraucher (z.B. bei Götterspeise) vorliegen.

Die Herstellung solcher Gelatinelösungen ist oft mit technischen Problemen verbunden, die von den Eigenschaften sowohl der verwendeten Gelatine als auch weiterer Komponenten, die zur Herstellung des jeweiligen Produkts gemeinsam mit der Gelatine gelöst werden müssen, herrühren können. Insbesondere führt häufig eine Kombination aus geringer Dichte und schlechter Benetzbarkeit der Gelatine und/oder weiterer Komponenten, die meist in Pulverform vorliegen, sowie der benötigten hohen Konzentration der Lösung dazu, dass nicht immer eine vollständige Auflösung möglich ist und ein hohes Risiko der Klumpenbildung besteht. Diese Klumpen lassen sich nur, wenn überhaupt noch möglich, durch eine mechanische Zerkleinerung und unwirtschaftlich lange Wartezeiten in Lösung bringen. Eine Alternative wäre es, das Verklumpen durch starke Agitation zu verhindern, was wiederum zu einer unerwünschten Schaumbildung führt.

Die US 4,546,002 offenbart eine Gelatine enthaltende Pulvermischung für die Herstellung von Gelatinedesserts, umfassend Partikel aus amorpher Gelatine mit einer Größe unterhalb von 0,063 mm.

Die US 2005/0089619 A1 offenbart ein Verfahren zur Herstellung von aufgeschäumten Süßwaren unter Verwendung einer Mischung von trockener Saccharose und trockener Gelatine, wobei die trockene Gelatine eine Partikelgröße von weniger als 2,36 mm (8 Mesh) aufweist, zum Beispiel von ungefähr 0,425 mm (40 Mesh).

Die US 1,896,049 offenbart ein Gelatineprodukt in Form von Partikeln umfassend mindestens 10 Gew.% Gelatine, Zucker, Fruchtsäure, Aroma und Farbmittel zur Herstellung von Gelatine-Desserts und ein Verfahren zur Herstellung dieses Produkts, welches ein Tablettierungsverfahren umfasst.

Vor diesem Hintergrund liegt der Erfindung die Aufgabe zugrunde, eine Zusammensetzung vorzuschlagen, mit der sich eine wässrige Lösung von Gelatine und einer oder mehreren weiteren Komponenten, die insbesondere für die Weiterverarbeitung zu Lebensmitteln geeignet ist, schnell und effektiv herstellen lässt.

Diese Aufgabe wird gelöst durch eine Zusammensetzung der eingangs genannten Art in Form von kompaktierten Partikeln, umfassend mindestens 5 Gew.% Gelatine und/oder Kollagenhydrolysat, wobei die kompaktierten Partikel einen mittleren Partikeldurchmesser von 0,8 bis 4,2 mm und ein Schüttgewicht von 350 bis 800 g/l aufweisen, wobei die kompaktierten Partikel durch Verpressung eines feinpulvrigen Ausgangsmaterials durch eine Krafteinwirkung aus zwei entgegengesetzten Richtungen hergestellt sind, und wobei die Gelatine einen amorphen Anteil von weniger als 25% aufweist.

Die erfindungsgemäße Zusammensetzung wird durch ein Kompaktieren, d.h. Verpressen, von Gelatine und/oder Kollagenhydrolysat, sowie ggf. weiterer Komponenten, hergestellt. Geeignete Verfahren für eine solche Kompaktierung, wie z.B. die Walzenkompaktierung, sind aus dem Stand der Technik bekannt. Interessanterweise wurde im Rahmen der Erfindung festgestellt, dass die Kompaktierung trotz der kleineren spezifischen Oberfläche im Vergleich zu pulverförmigen Ausgangsmaterialien zu einem insgesamt schnelleren und technisch weniger aufwändigen Auflösen in Wasser bzw. einem wässrigen Medium führt, da insbesondere spezielle Vorgehensweisen und Verfahrensschritte, die die Klumpen- bzw. Schaumbildung verhindern sollen, nicht mehr notwendig sind und dennoch die Klumpen- bzw. Schaumbildung verringert oder ganz vermieden wird.

Bei Kompaktierungsverfahren wie z.B. der Walzenkompaktierung erfolgt eine Verpressung des Ausgangsmaterials zu kompaktierten Partikeln durch eine Krafteinwirkung aus zwei entgegengesetzten Richtungen (also z.B. durch zwei parallele Walzen). Im Gegensatz hierzu stehen insbesondere Tablettierungsverfahren, bei denen ein Ausgangsmaterial zur Herstellung von Tabletten oder ähnlichen pharmazeutischen Verabreichungsformen in eine mehrseitig geschlossene Hohlform eingepresst wird.

Für bestimmte Anwendungen umfasst die erfindungsgemäße Zusammensetzung lediglich einen relativ geringen Anteil von mindestens 5 Gew.% Gelatine und/oder Kollagenhydrolysat, bevorzugt mindestens 10 Gew.%, weiter bevorzugt mindestens 15 Gew.%.

Andere Anwendungen erfordern einen höheren Gehalt an Gelatine und/oder Kollagenhydrolysat von mindestens 40 Gew.%, bevorzugt mindestens 60 Gew.%, weiter bevorzugt mindestens 80 Gew.%.

Von Vorteil ist auch die Tatsache, dass mit Hilfe der erfindungsgemäßen Zusammensetzung alle oder ein Großteil der Komponenten, die für das jeweilige Endprodukt benötigt werden, in einem einzigen Verfahrensschritt gemeinsam aufgelöst werden können, ohne dabei eine spezielle Zugabereihenfolge einhalten zu müssen. Somit kann verhindert werden, dass schlecht lösliche Komponenten durch die zuvor in Lösung gegangen leichter löslichen Komponenten den Lösevorgang dieser noch mehr verlangsamen bzw. gänzlich verhindern, da sie durch ihr in Lösung gehen die Menge des frei verfügbaren Wassers deutlich reduzieren. Dadurch lassen sich viele Löseprozesse vereinfachen und insgesamt beschleunigen.

Bei einigen bevorzugten Ausführungsformen der Erfindung umfasst die Zusammensetzung daher mindestens eine weitere Komponente, die bei Raumtemperatur wasserlöslich ist, zusätzlich zu der Gelatine und/oder dem Kollagenhydrolysat.

Die kompaktierten Partikel sind gemäß der Erfindung insbesondere durch Kompaktieren einer im Wesentlichen trockenen Feststoffmischung hergestellt. Im Gegensatz zu einer Kompaktierung bzw. Verpressung von feuchten Ausgangsmaterialien können auf diese Weise Partikel mit den gewünschten Eigenschaften, insbesondere einer hohen Schüttdichte, erhalten werden.

Die im Wesentlichen trockene Feststoffmischung enthält insbesondere kein freies Wasser, sondern nur gebundenes Wasser, insbesondere in der Gelatine und/oder dem Kollagenhydrolysat. So weist z.B. trockene Gelatine unter normalen Umgebungsbedingungen einen gebundenen Wasseranteil im Bereich von etwa 8 bis 12 Gew.% auf.

Bei der Herstellung der erfindungsgemäßen Zusammensetzung werden aus feinpulverigen Vormischungen mit Hilfe des Kompaktierungsprozesses entmischungsstabile kompaktierte Partikel hergestellt, wobei der Prozess neben dem reinen Kompaktieren günstigerweise einen Mahl- und Siebvorgang beinhaltet. Das Mahlen bestimmt die maximale Größe der Partikel, während über die nachgeschalteten Siebe die Fein- und Grobanteile entfernt werden können, um dann erneut entweder dem Kompaktierungsvorgang oder der Mühle zugeführt zu werden.

Durch die entsprechende Einstellung der Mühle und die Kombination unterschiedlicher Siebe lassen sich die mittleren Partikeldurchmesser und Korngrö-ßenverteilungen in einem weiten Bereich einstellen. Wobei allgemein gilt, dass je enger die Korngrößenverteilung ist, desto mehr Material muss der Kompaktierung bzw. der Mühle erneut zugeführt werden, was die Effizienz des Prozesses verschlechtert. Je nach Kompaktierfähigkeit der Ausgangsmischung und der gewünschten Korngrößenverteilung lassen sich mit einem Kompaktierungszyklus Ausbeuten von 30 bis 80%, insbesondere von 40 bis 60%, an kompaktierten Partikeln erzielen.

Die Wahl der Korngrößenverteilung richtet sich insbesondere nach der späteren Verwendung der kompaktierten Partikel. Zur Herstellung von hoch konzentrierten gelatinehaltigen Lösungen, wie sie zum Beispiel für die Herstellung von Gummisüßwaren oder Gelatineweichkapseln typisch sind, sollten die Partikel bevorzugt einen mittleren Partikeldurchmesser von 1,3 bis 2,8 mm aufweisen. Die Korngrößenverteilung kann dabei relativ breit sein, wobei bevorzugt mindestens 75% der Partikel im Bereich von ±80%, insbesondere ±50% des mittleren Partikeldurchmessers liegen. Mit Partikeln in dieser Größenordnung können die beschriebenen Vorteile besonders gut erreicht werden.

Das Schüttgewicht der kompaktierten Partikel liegt im Bereich von 350 bis 800 g/l, insbesondere von 400 bis 700 g/l.

Eine bevorzugte Ausführungsform der Erfindung betrifft eine Zusammensetzung, die zur Herstellung von Süßwaren auf Basis eines Gelatinegels, wie z.B. Gummibären oder Fruchtgummis, vorgesehen ist. Zur Herstellung der Gießlösung für derartige Produkte wird von herkömmlicher Gelatine ausgegangen, die aufgrund ihrer überwiegend kristallinen Struktur (amorpher Anteil von weniger als 25 %) nur bei erhöhten Temperaturen (in der Regel ab etwa 60 °C) in Wasser löslich ist.

Unter herstellungstechnischen Gesichtspunkten (Aussehen, Trocknung usw.) sollte die Gießlösung für derartige Produkte einen möglichst geringen Wassergehalt, insbesondere unter 40 Gew.%, aufweisen. Die Herstellung einer entsprechend hochkonzentrierten Lösung von Gelatine und weiteren Komponenten der Süßwaren stellt sich insbesondere dann als problematisch dar, wenn als eine dieser Komponenten in größeren Mengen Kollagenhydrolysat eingesetzt wird. Süßwaren auf Gelatinebasis, die zusätzlich Kollagenhydrolysat enthalten, werden aufgrund der gesundheitsfördernden Eigenschaften von Kollagenhydrolysat als sogenanntes "Functional Food" angeboten. Im Hinblick auf eine ernährungsphysiologische Optimierung des Endproduktes ist es sinnvoll, eine hohe Konzentration an Kollagenhydrolysat vorzusehen, da für die Erzielung der angestrebten gesundheitlichen Wirkung eine bestimmte Dosierung pro Tag erforderlich ist. Da Gummibonbons usw. zu einem überwiegenden Anteil aus Zucker bestehen, wäre im Falle einer geringen Dosierung an Kollagenhydrolysat zwangsläufig die damit verbundene Aufnahme von Zucker ernährungsphysiologisch nicht mehr akzeptabel.

Zu Erfüllung dieser Anforderungen müssen daher bei der Herstellung der Gießlösung relativ hohe Mengen an Kollagenhydrolysat in relativ wenig Wasser aufgelöst werden, was bei einem pulverförmigen Ausgangsprodukt unweigerlich mit Schaumbildung, Klumpenbildung und/oder einer sehr langen Wartezeit verbunden ist. Der Prozess wird damit ineffizient bzw. führt zu Qualitätsmängeln des Produkts.

Die gemeinsame Kompaktierung von Gelatine und Kollagenhydrolysat (und ggf. weiterer Komponenten) stellt daher im Rahmen der Erfindung eine besonders effektive Möglichkeit dar, relativ hoch konzentrierte Lösungen mit geringem Aufwand herzustellen. Wie bereits oben beschrieben, lassen sich die kompaktierten Partikel aufgrund ihrer höheren Dichte zunächst gut benetzen und dispergieren und dann mittels geringer Agitation auflösen.

Günstigerweise umfasst die Zusammensetzung bei dieser Ausführungsform 20 bis 80 Gew.% Kollagenhydrolysat, insbesondere 35 bis 70 Gew.%. Der Anteil an Gelatine kann dabei insbesondere im Bereich von 10 bis 80 Gew.% liegen.

Das Kollagenhydrolysat weist typischerweise ein mittleres Molekulargewicht von 1.000 bis 8.000 Da auf, insbesondere von 2.000 bis 5.000 Da. Derartige Hydrolysate sind bei Raumtemperatur wasserlöslich und im Gegensatz zu Gelatine nicht gelierfähig, d.h. die Gelierfähigkeit stellt das wesentliche Unterscheidungsmerkmal zwischen Gelatine und Kollagenhydrolysat dar. Die Gelierkraft der verwendeten Gelatine liegt bevorzugt im Bereich von 160 bis 300 g Bloom, insbesondere von 180 bis 280 g Bloom.

Im Zusammenhang mit dieser Ausführungsform betrifft die Erfindung auch die Verwendung einer derartigen Zusammensetzung zur Herstellung von Süßwaren auf Basis eines Gelatinegels, wobei die Herstellung einen Schritt des Auflösens der kompaktierten Partikel in Wasser bei 60 bis 90 °C umfasst, so dass eine Lösung mit einem Feststoffgehalt von 33 bis 60 Gew.% resultiert. Diese wird entsprechend der Rezeptur (Dosierung gemäß gewünschtem Wirkstoffgehalt) analog zu üblichen Gelatinelösungen bei der Herstellung von Standardprodukten dem Zuckeransatz zugesetzt.

Ein zusätzlicher vorteilhafter Effekt kann gemäß einer bevorzugten Ausführungsform der Erfindung dadurch erzielt werden, dass die Zusammensetzung mindestens eine weitere wasserlösliche Komponente umfasst. Diese Komponente wirkt hier als ein "Fülltrennstoff", der die Gelatine zunächst vor einem Verklumpen schützt. Während die weitere Komponente dann nach und nach aufgelöst wird, kann auch die Gelatine zunächst hydratisiert und schließlich aufgelöst werden, so dass sich eine homogene, klare Lösung ergibt.

Mit besonderem Vorteil ist die mindestens eine weitere Komponente ausgewählt aus einem oder mehreren Zuckern, Oligosacchariden (z.B. Saccharose, Glucose oder Maltodextrin) und/oder Zuckeraustauschstoffen (z.B. Zuckeralkoholen wie Sorbit). Zum einen sind Zucker oder Zuckeraustauschstoffe in den genannten Desserts ohnehin enthalten und zum anderen eignen sie sich aufgrund ihrer sehr guten Löslichkeit in besonderem Maße für die Erreichung des oben beschriebenen Effekts.

Vorzugsweise umfasst die Zusammensetzung 50 bis 95 Gew.%, insbesondere 65 bis 75 Gew.% Zucker, Oligosaccharide und/oder Zuckeraustauschstoffe.

Gegenstand der Erfindung ist in diesem Zusammenhang auch die Verwendung einer derartigen Zusammensetzung zur Herstellung von Desserts auf Basis eines Gelatinegels, wobei die Herstellung einen Schritt des Auflösens der kompaktierten Partikel in Wasser bei 10 bis 40 °C umfasst, so dass eine Lösung mit einem Feststoffgehalt von weniger als 30 Gew.% resultiert.

Bei einer Verwendung für die Herstellung von Lebensmitteln kann die erfindungsgemäße Zusammensetzung eine oder mehrere weitere Komponenten umfassen, die ausgewählt sind aus Aromastoffen, Farbstoffen, Säureregulatoren, Emulgatoren, Stabilisatoren, Benetzungsmitteln und Konservierungsmitteln. Prinzipiell können alle gewünschten Bestandteile des Endprodukts in die kompaktierten Partikel integriert werden, so dass sich ein besonders einfacher Verfahrensablauf bei der Herstellung ergibt.

Eine weitere bevorzugte Anwendung der erfindungsgemäßen Zusammensetzung betrifft Produkte aus pulverförmigen Bestandteilen mit großen Dichteunterschieden, bei denen ein hohes Risiko besteht, dass sich die einzelnen Komponenten durch das Handling beim Weiterverarbeiten, z.B. beim Abpacken, wieder entmischen. Aus den feinpulverigen Vormischungen werden mithilfe des Kompaktierungsprozesses entmischungsstabile homogene Agglomerate erzeugt, bei denen die Einzelkomponenten in einem konstanten Verhältnis in die Agglomeratmatrix fest eingebunden sind. Die so hergestellten Produkte lassen sich aufgrund ihrer Dichteunterschiede mechanisch nicht mehr trennen und zeigen im Vergleich zu der Mischung der verschiedenen Einzelkomponenten ein erhöhtes Schüttgewicht.

Diese und weitere Vorteile der Erfindung werden anhand der nachfolgenden Ausführungsbeispiele unter Bezugnahme auf die Zeichnung näher erläutert. Darin zeigt:

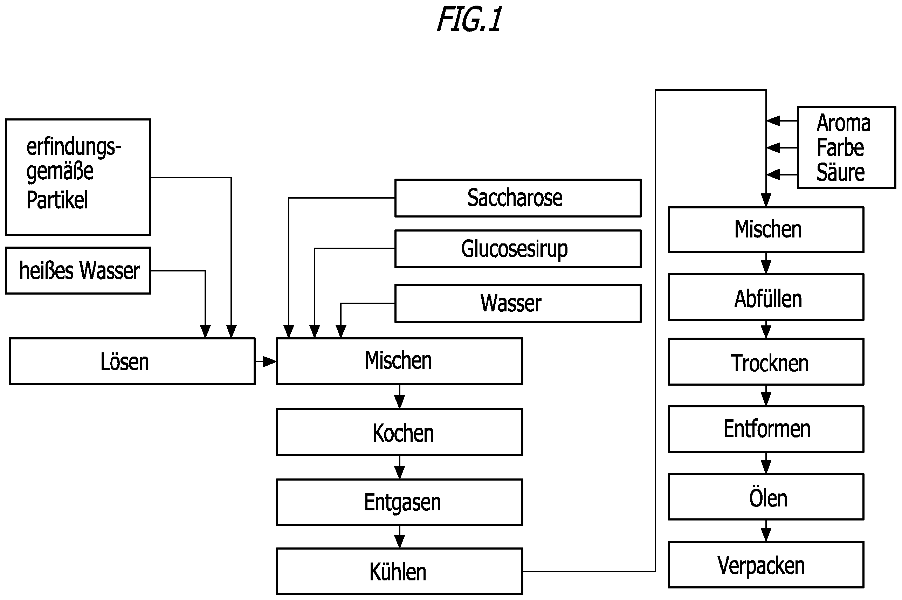

Fig. 1: ein Fließschema zur Herstellung von Gummibonbons aus erfindungsgemäßen kompaktierten Partikeln.

### Beispiele

### Beispiel 1: Kompaktierte Partikel enthaltend Gelatine und Kollagenhydrolysat zur Herstellung von "Beauty"-Gummibonbons

Es wurde eine Mischung hergestellt aus 28,6 Gew.% Pulvergelatine (Partikelgröße <0,2 mm; Schüttgewicht 582 g/l) und 71,4 Gew.% eines Kollagenhydrolysats (Partikelgröße <0,150 mm; Schüttgewicht 304 g/l), das von der GELITA AG unter der Bezeichnung Verisol^{®} erhältlich ist. Zur Verminderung des Klebens beim Kompaktieren wurden zusätzlich 0,01 Gew.% Magnesiumstearat zugegeben. Diese Mischung wurde einem Kompaktierungsprozess unterworfen, wobei als gewünschtes Endprodukt (Gutkorn) die Fraktion mit einer Partikelgröße zwischen 1 und 4 mm festgelegt wurde.

Die Mischung wurde mit einer Leistung von 80 kg/h und einem Druck von 40 kN kompaktiert, gemahlen und gesiebt. Die Ausbeute bei einem Kompaktierungszyklus betrug 72%. Überkorn entstand nicht, da der Feinkornanteil von 28% direkt kontinuierlich dem Kompaktierungsprozess wieder zugefügt wurde.

Die Gutkornfraktion hatte eine mittlere Korngröße von 3 mm und eine Korngrößenverteilung von 0,8 bis 3,8 mm.

Die erhaltenen Partikel (Agglomerate aus Gelatine und Kollagenhydrolysat) wurden für die Herstellung von Gummibonbons mit einem Wirkstoffanteil (Anteil an Verisol^{®}-Kollagenhydrolysat) von ca. 30 Gew.% benutzt. Der Produktionsablauf hierfür ist analog zur Herstellung von Standard-Gummibonbons, jedoch mit einer durch die modifizierte Rezeptur bedingten Zusammensetzung der Gießmasse. Diese wies in diesem Beispiel einen Wassergehalt von 35 Gew.% anstatt der üblichen 25 Gew.% auf, wodurch der Prozess eine längere Trocknungszeit beinhaltete, um den für das Endprodukt wichtigen Wassergehalt von weniger als 20 Gew.% zu erreichen.

Der Prozessablauf erfolgte gemäß dem in der Fig. 1 dargestellten Fließschema. Die verwendete Rezeptur setzte sich aus den in der Tabelle 1 angegebenen Komponenten zusammen.

**Tabelle 1**

| **Komponente** | **Anteil in Gew.%** | |
|---|---|---|
| Saccharose | 17,0 | |
| Glucosesyrup 42 DE (Dextrose-Einheiten) | 22,7 | |
| erfindungsgemäße kompaktierte Partikel | 32,4 | |
| Wasser | 24,6 | |
| Zitronensäure 50%ig | | 3,2 |
| Aroma- und Farbstoffe | nach Bedarf | |
| Anti-Haftmittel | nach Bedarf | |
| Summe | 100,0 | |

Das Endprodukt hatte die für Gummibonbons typischen Eigenschaften.

### Beispiel 2: Kompaktierte Partikel enthaltend Gelatine und Kollagenhydrolysat zur Herstellung von zuckerreduzierten Gummibonbons

Es wurde eine Mischung hergestellt aus 24 Gew.% Pulvergelatine (Partikelgröße <0,2mm; Schüttgewicht 612 g/l) und 76 Gew.% eines Kollagenhydrolysats (Partikelgröße <0,15 mm; Schüttgewicht 320 g/l), das von der GELITA AG unter der Bezeichnung Peptiplus^{®} erhältlich ist. Zur Verminderung des Klebens beim Kompaktieren wurden zusätzlich 0,01 Gew.% Magnesiumstearat zugegeben. Diese Mischung wurde einem Kompaktierungsprozess unterworfen, wobei als Gutkorn die Fraktion mit einer Partikelgröße zwischen 1 und 4 mm gewählt wurde.

Die Mischung wurde mit einer Leistung von 73 kg/h und einem Druck von 45 kN kompaktiert, gemahlen und gesiebt. Die Ausbeute bei einem Kompaktierungszyklus betrug 75%. Überkorn entstand nicht, der Feinkornanteil von 25% wurde direkt kontinuierlich dem Kompaktierungsprozess wider zugeführt.

### Die Gutkornfraktion hatte eine mittlere Korngröße von 3 mm und eine Korngrößenverteilung von 0,8 bis 3,8 mm.

Diese Partikel wurden für die Herstellung von Gummibonbons mit einem um 30% reduzierten Zuckeranteil verwendet. Die Herstellung erfolgte wie in Beispiel 1 beschrieben, allerdings mit einer modifizierten Rezeptur, die es erlaubte den Wassergehalt der Gießlösung auf ca. 30 Gew.% einzustellen, was im Vergleich zu Beispiel 1 eine kürzere Trocknungszeit erforderte.

Die verwendete Rezeptur setzte sich aus den in der Tabelle 2 angegebenen Komponenten zusammen.

**Tabelle 2**

| **Komponente** | **Anteil in Gew.%** | | |
|---|---|---|---|
| Saccharose | | 19,5 | |
| Glucosesyrup 42 DE | | 25,9 | |
| erfindungsgemäße kompaktierte Partikel | | 24,8 | |
| Wasser | | 28,1 | |
| Zitronensäure 50%ig | | | 1,7 |
| Summe | 100,0 | | |

Das Endprodukt hatte die für Gummibonbons typischen Eigenschaften.

### Referenzbeispiel 3 (nicht erfindungsgemäß): "Komplett-Compound" basierend auf Instantgelatine zur Herstellung von Götterspeise

Es wurde eine Mischung hergestellt aus 10 Gew.% Instantgelatine (Partikelgröße <0,17 mm; Schüttgewicht 347 g/l ), 88,3 Gew.% Kastorzucker (feinkörnige Saccharose), 1,7 Gew.% Zitronensäurepulver und entsprechenden Mengen an Aroma- und Farbstoffen. Diese Mischung wurde einem Kompaktierungsprozess unterworfen, wobei als Gutkorn die Fraktion mit einer Korngröße zwischen 0,1 und 0,5 mm gewählt wurde.

Die Mischung wurde mit einer Leistung von 81 kg/h und einem Druck von 80 kN kompaktiert, gemahlen und gesiebt. Die daraus resultierende Gutkornfraktion wies ein Schüttgewicht von 684 g/l auf.

Durch Einrühren von 120 g dieser erfindungsgemäßen Partikel in 500 ml kaltes Wasser erhält man nach einer definierten Kühlzeit das verzehrfertige Produkt Götterspeise.

### Beispiel 4: Nahrungsergänzungsmittel basierend auf einem Kollagenhydrolysat, Calciumlactat und Vitamin D

Es wurde eine Mischung hergestellt aus 37 Gew.% eines Kollagenhydrolysats (Partikelgröße <0,16 mm; Schüttgewicht 374 g/l), das von der GELITA AG unter der Bezeichnung Fortibone^{®} erhältlich ist, 27 Gew.% Calciumlactat und 0,03 Gew.% Vitamin D. Das Schüttgewicht der Mischung betrug 467 g/l. Diese Mischung wurde einem Kompaktierungsprozess unterworfen, wobei als Gutkorn zwei Fraktion mit einer Korngröße zwischen 0,1 und 0,25 mm bzw. zwischen 0,8 und 1,0 mm gewählt wurden.

Die Mischung wurde mit einem Druck von 50 kN kompaktiert, gemahlen und gesiebt.

Mit den so hergestellten Partikeln wurden Hartkapseln befüllt. Die Befüllung der Hartkapseln war aufgrund der guten Rieselfähigkeit des Produktes deutlich einfacher als bei einer Befüllung mit den feinpulverigen Ausgangsmaterialien, und die Gefahr einer Entmischung des Füllgutes während der Befüllung bestand nicht.

Durch das höhere Schüttgewicht konnte ein um 55% bzw. 95% höherer Füllgrad im Vergleich zur nicht kompaktierten Pulvermischung erreicht werden, wobei sich eine Mischung der beiden unterschiedlichen Gutkornfraktionen als besonders vorteilhaft erwies. Die entsprechenden Werte ergeben sich aus der Tabelle 3.

Dadurch lässt sich die empfohlene Tagesdosis an Kapseln deutlich reduzieren.

**Tabelle 3**

| | **Pulvermischung** | **kompaktierte Partikel** | **Kompaktierte Partikel** |
|---|---|---|---|
| Partikelgröße | <0,16 mm | Fraktion 0,8 bis 1,0 mm | Fraktion 0,8-1,0 mm und Fraktion 0,1-0,25 mm im Verhältnis 2:1 |
| Füllmenge | 0,22 g | 0,34 g | 0,43 g |
| Füllgrad | 100% | 155% | 195% |

## Patentansprüche

1. Zusammensetzung in Form von kompaktierten Partikeln, umfassend mindestens 5 Gew.%, bevorzugt mindestens 10 Gew.%, weiter bevorzugt mindestens 15 Gew.% Gelatine und/oder Kollagenhydrolysat, wobei die kompaktierten Partikel einen mittleren Partikeldurchmesser von 0,8 bis 4,2 mm und ein Schüttgewicht von 350 bis 800 g/l aufweisen, wobei die kompaktierten Partikel durch Verpressung eines feinpulvrigen Ausgangsmaterials durch eine Krafteinwirkung aus zwei entgegengesetzten Richtungen hergestellt sind, und wobei die Gelatine eine amorphen Anteil von weniger als 25% aufweist.

2. Zusammensetzung nach Anspruch 1, umfassend mindestens 40 Gew.%, bevorzugt mindestens 60 Gew.%, weiter bevorzugt mindestens 80 Gew.% Gelatine und/oder Kollagenhydrolysat.

3. Zusammensetzung nach einem der vorhergehenden Ansprüche, ferner umfassend mindestens eine weitere Komponente, die bei Raumtemperatur wasserlöslich ist.

4. Zusammensetzung nach einem der vorhergehenden Ansprüche, wobei die kompaktierten Partikel durch Kompaktieren einer im Wesentlichen trockenen Feststoffmischung als feinpulvriges Ausgangsmaterial hergestellt sind.

5. Zusammensetzung nach Anspruch 4, wobei die Feststoffmischung kein freies Wasser, sondern nur gebundenes Wasser, insbesondere in der Gelatine und/oder dem Kollagenhydrolysat, enthält.

6. Zusammensetzung nach einem der vorangehenden Ansprüche, wobei die kompaktierten Partikel einen mittleren Partikeldurchmesser von 1,3 bis 2,8 mm aufweisen.

7. Zusammensetzung nach einem der vorangehenden Ansprüche, wobei die kompaktierten Partikel ein Schüttgewicht von 400 bis 700 g/l aufweisen.

8. Zusammensetzung nach einem der Ansprüche 1 bis 7, wobei die Zusammensetzung 20 bis 80 Gew.% Kollagenhydrolysat umfasst, insbesondere 35 bis 70 Gew.%.

9. Zusammensetzung nach einem der Ansprüche 1 bis 8, wobei die Zusammensetzung 10 bis 80 Gew.% Gelatine umfasst.

10. Zusammensetzung nach Anspruch 8 oder 9, wobei das Kollagenhydrolysat ein mittleres Molekulargewicht von 1.000 bis 8.000 Da aufweist, insbesondere von 2.000 bis 5.000 Da.

11. Verwendung einer Zusammensetzung nach einem der Ansprüche 1 bis 10 zur Herstellung von Süßwaren auf Basis eines Gelatinegels, wie z.B. Gummibären oder Fruchtgummis, wobei die Herstellung einen Schritt des Auflösens der kompaktierten Partikel in Wasser bei 60 bis 90 °C umfasst, so dass eine Lösung mit einem Feststoffgehalt von 33 bis 60 Gew.% resultiert.

## Claims

1. Composition in the form of compacted particles, comprising at least 5 wt %, preferably at least 10 wt %, more preferably at least 15 wt %, of gelatin and/or collagen hydrolysate, wherein the compacted particles have a mean particle diameter of from 0.8 to 4.2 mm and a bulk weight of from 350 to 800 g/l, wherein the compacted particles are produced by compression of a fine-powdered starting material by application of a force from two opposite directions, and wherein the gelatin has an amorphous proportion of less than 25 %.

2. Composition according to claim 1, comprising at least 40 wt %, preferably at least 60 wt %, more preferably at least 80 wt %, of gelatin and/or collagen hydrolysate.

3. Composition according to any one of the preceding claims, also comprising at least one further component, which is water-soluble at room temperature.

4. Composition according to any one of the preceding claims, wherein the compacted particles are produced by compaction of a substantially dry solid material mixture as the fine-powdered starting material.

5. Composition according to claim 4, wherein the solid material mixture does not contain any free water, but instead only bound water, in particular in the gelatin and/or the collagen hydrolysate.

6. Composition according to any one of the preceding claims, wherein the compacted particles have a mean particle diameter of from 1.3 to 2.8 mm.

7. Composition according to any one of the preceding claims, wherein the compacted particles have a bulk weight of from 400 to 700 g/l.

8. Composition according to claim 7, wherein the composition comprises 20 to 80 wt % of collagen hydrolysate, in particular 35 to 70 wt %.

9. Composition according to any one of claims 1 to 8, wherein the composition comprises 10 to 80 wt % of gelatin.

10. Composition according to claim 8 or 9, wherein the collagen hydrolysate has a mean molecular weight of from 1,000 to 8,000 Da, in particular from 2,000 to 5,000 Da.

11. Use of a composition according to any one of claims 1 to 10 for the production of confectionery products on the basis of a gelatin gel, such as gummy bears or fruit gums, wherein the production comprises a step of dissolution of the compacted particles in water at 60 to 90°C, such that a solution having a solid material content of from 33 to 60 wt % results.

## Revendications

1. Composition sous la forme de particules compactées, comprenant au moins 5 % en poids, de manière préférée au moins 10 % en poids, de manière davantage préférée au moins 15 % en poids de gélatine et/ou d'hydrolysat de collagène, dans laquelle les particules compactées présentent un diamètre moyen de particule de 0,8 à 4,2 mm et une densité apparente de 350 à 800 g/l, dans laquelle les particules compactées sont fabriquées par compression d'une fine poudre de matériau de départ par l'action d'une force depuis deux directions opposées, et dans laquelle la gélatine présente une part amorphe inférieure à 25 %.

2. Composition selon la revendication 1, comprenant au moins 40 % en poids, de manière préférée au moins 60 % en poids, de manière davantage préférée au moins 80 % en poids de gélatine et/ou d'hydrolysat de collagène.

3. Composition selon l'une quelconque des revendications précédentes, comprenant en outre au moins un autre composant, qui est hydrosoluble à température ambiante.

4. Composition selon l'une quelconque des revendications précédentes, dans laquelle les particules compactées sont fabriquées en compactant un mélange de matières solides sensiblement sec en tant que fine poudre de matériau de départ.

5. Composition selon la revendication 4, dans laquelle le mélange de matières solides ne contient aucune eau libre, mais seulement de l'eau liée, en particulier dans la gélatine et/ou l'hydrolysat de collagène.

6. Composition selon l'une quelconque des revendications précédentes, dans laquelle les particules compactées présentent un diamètre de particule moyen de 1,3 à 2,8 mm.

7. Composition selon l'une quelconque des revendications précédentes, dans laquelle les particules compactées présentent une densité apparente de 400 à 700 g/l.

8. Composition selon l'une quelconque des revendications 1 à 7, dans laquelle la composition comprend 20 à 80 % en poids d'hydrolysat de collagène, en particulier 35 à 70 % en poids.

9. Composition selon l'une quelconque des revendications 1 à 8, dans laquelle la composition comprend 10 à 80 % en poids de gélatine.

10. Composition selon la revendication 8 ou 9, dans laquelle l'hydrolysat de collagène présente un poids moléculaire moyen de 1000 à 8000 Da, en particulier de 2000 à 5000 Da.

11. Utilisation d'une composition selon l'une quelconque des revendications 1 à 10 pour fabriquer des confiseries à base de gel de gélatine, comme des oursons en gomme ou des gommes de fruit, dans laquelle la fabrication comprend une étape de dissolution des particules compactées dans l'eau à 60 à 90 °C si bien qu'il en résulte une solution avec une teneur en matières solides de 33 à 60 % en poids.
